# EUROPÄISCHE PATENTSCHRIFT

(11) **EP 0 688 815 B1**
(45) Veröffentlichungstag und Bekanntmachung des Hinweises auf die Patenterteilung: **03.02.1999**
(21) Anmeldenummer: 95108891.3
(22) Anmeldetag: 09.06.1995
(51) Int. Cl.: C08J 11/24

(54) **Verfahren zur Herstellung von Hydroxylgruppen aufweisenden Verbindungen aus (Polyurethan) Polyharnstoffabfällen**
Process for the preparation of hydroxy-groups containing compounds from (polyurethane)polyurea waste
Procédé pour la préparation de composés contenant des groupements d'hydroxyle à partir de déchets de (polyuréthane) polyurée

(30) Priorität: 23.06.1994 DE 4421902
(43) Veröffentlichungstag der Anmeldung: 27.12.1995
(73) Patentinhaber: BAYER AG, 51368 Leverkusen (DE)
(72) Erfinder: Münzmay, Thomas, Dr., D-41539 Dormagen (DE); Rasshofen, Werner, Dr., D-51061 Köln (DE); Meckel, Walter, Dr., D-41468 Neuss (DE)

(56) Entgegenhaltungen:
- EP-A- 0 537 579
- DE-A- 4 324 156
- DE-C- 4 116 700

## Beschreibung

Die Erfindung betrifft ein Verfahren zur Herstellung von für das Polyisocyanat-Polyadditionsverfahren geeigneten, Hydroxylgruppen aufweisenden Verbindungen aus Polyurethanpolyharnstoff- und/oder Polyharnstoffabfällen durch alkoholytische Zersetzung dieser Kunststoffe und Reaktion der Alkoholyseprodukte zur Reduktion ihres Gehaltes an niedermolekularen, sterisch ungehinderten, aromatischen Aminen.

Die alkoholytische Zersetzung von nach dem Polyisocyanat-Polyadditionsverfahren hergestellten Kunststoffen ist im Prinzip bekannt. Jedoch ist das Problem der alkoholytischen Zersetzung von Polyurethanpolyharnstoff- oder Polyharnstoffabfällen unter Wiedergewinnung von brauchbaren Alkoholyseprodukten, insbesondere das Problem der Aufarbeitung von solchen Kunststoffen, die unter Verwendung von Polyisocyanatgemischen der Diphenylmethanreihe und aromatischen Diaminen als Kettenverlängerungsmittel hergestellt worden waren, d.h. von harnstoffgruppenreichen PUR-Abfällen, ungelöst.

Glykolysate von harnstoffgruppenhaltigen bzw. -reichen Polyurethanpolyharnstoff-Polyharnstoffabfällen zeichnen sich durch einen relativ hohen Gehalt an niedermolekularen, primären, aromatischen Aminen, insbesondere an sterisch ungehinderten, primären, aromatischen Aminen aus (B. Naber: "Recycling von Polyurethanen (PUR)", Kunststoffrecycling-Tagung der TU Berlin, 01.10.1991).

Dies beeinträchtigt die Wiederverwendbarkeit derartiger Glykolysate im Isocyanat-Polyadditionsprozeß unter Umständen erheblich. Zum einen hat ein hoher Gehalt an niedermolekularen, primären, aromatischen Aminen aufgrund deren hoher Reaktivität einen negativen Einfluß auf die Verarbeitbarkeit derartiger Glykolysate z.B. im Reaktionsspritzgußverfahren (RIM). Dies äußert sich z.B. in zu kurzen Fließwegen, d.h. anspruchsvolle Formen können nicht gefüllt werden.

Zum anderen kann ein zu hoher Gehalt an niedermolekularen, primären, aromatischen Aminen, insbesondere an sterisch ungehinderten, primären, aromatischen Aminen zu einem derartig gestörten Polymeraufbau führen, daß Produkte mit niedrigem Eigenschaftsniveau erhalten werden (hohe Glastemperatur, geringe Reißfestigkeit und Reißdehnung).

Es war daher die der Erfindung zugrundeliegende Aufgabe, ein neues Verfahren zur Herstellung von Hydroxylgruppen aufweisenden Verbindungen aus Polyurethanpolyharnstoff- oder Polyharnstoffabfällen durch alkoholytische Zersetzung zur Verfügung zu stellen, die frei von niedermolekularen, sterisch ungehinderten, primären, aromatischen Aminen oder zumindest in ihrem Gehalt stark reduziert sind.

Diese Aufgabe konnte mit der Bereitstellung des nachstehend näher beschriebenen Verfahrens gelöst werden.

Gegenstand der vorliegenden Erfindung ist daher ein Verfahren zur Herstellung von für das Polyisocyanat-Polyadditionsverfahren geeigneten, Hydroxylgruppen aufweisenden Verbindungen aus Polyurethanpolyharnstoff- und/oder Polyharnstoffabfällen durch Behandlung von Polyurethanpolyharnstoff- und/oder Polyharnstoffabfällen mit Di- und/oder Polyolen bei Temperaturen von 160 bis 260°C, bevorzugt 160 bis 240°C, wobei vorzugsweise während der Aufheizphase das sich im Reaktionsgefäß befindende Wasser destillativ entfernt wird, das dadurch gekennzeichnet ist, daß der Reaktionsmischung vor oder während der Alkoholysereaktion 1,3-Dicarbonylverbindungen zugesetzt werden.

Die Menge an 1,3-Dicarbonylverbindungen, die der Reaktionsmischung zugesetzt wird, beträgt im allgemeinen 0,5 bis 30, bevorzugt 1 bis 20, insbesondere 1 bis 10 Gew.-%, bezogen auf Gesamtgemisch an Polyurethanpolyharnstoffe und/oder Polyharnstoffabfällen.

Selbstverständlich ist es auch möglich, zur Vervollständigung der Reaktion bzw. zur Beschleunigung der Reaktion entsprechende Katalysatoren mitzuverwenden.

Als Katalysatoren kommen Protonsäuren, z.B. Chloressigsäure, Trichloressigsäure, Trifluoressigsäure, p-Toluolsulfonsäure, Methansulfonsäure, Schwefelsäure oder Phosphorsäure, oder Lewissäuren, z.B. Bortrifluorid, Zinndichlorid, Eisen(III)chlorid, in Frage. Auch aminische Katalysatoren, bevorzugt tertiäre Amine, können Verwendung finden. Die Katalysatoren werden üblicherweise in Mengen von 0,001 bis 10 Gew.-%, bevorzugt 0,01 bis 2 Gew.-%, eingesetzt, bezogen auf Gesamtgewicht der Reaktionsmischung.

Die Alkoholysereaktion kann nach an sich bekannten Verfahren erfolgen, in dem man grob gemahlene oder fein zerkleinerte Polyurethanpolyharnstoff und/oder Polyharnstoffabfälle (bevorzugt nach Entwässerung der Mischung im Temperaturbereich von 60 bis 220°C) bei Temperaturen von 160 bis 260°C, mit Di- und/oder Polyolen im Gewichtsverhältnis Abfall:Di- und/oder Polyole gleich 10:1 bis 1:100, bevorzugt 10:1 bis 1:20, insbesondere 5:1 bis 1:3, umsetzt.

Als Di- und/oder Polyole kommen z.B. Ethylenglykol, Diethylenglykol und höhere Kondensate, 1,2-Propylenglykol, Dipropylenglykol und höhere Kondensate, Hexandiol, Glyzerin, Trimethylolpropan, sowie deren Ethoxylierungs- und/oder Propoxylierungsprodukte in Frage. Gegebenenfalls können die im Überschuß eingesetzten Di- und/oder Polyole im Anschluß an die alkoholytische Zersetzungsreaktion teilweise destillativ aus den hydroxylgruppenhaltigen Zersetzungspodukten entfernt werden.

Darüberhinaus können den Alkoholyseprodukten noch vor, während oder nach der alkoholytischen Zersetzungsreaktion zur Viskositätseinstellung Makroglykole des Molekulargewichtsbereichs >350, wie sie aus der Polyurethanchemie an sich bekannt sind, zugesetzt werden.

Als 1,3-Dicarbonylverbindungen kommen z.B. 1,3-Diketone, wie Pentan-2,4-dion, Dimedon, oder β-Ketocarbonsäurederivate, z.B. die Veresterungsprodukte der Acetoessigsäure mit Mono-, Di- oder Polyolen, wie Methanol, Ethanol, Propanol, Butanol, Ethandiol, 1,2-Propandiol, 1,4-Butandiol, 1,6-Hexandiol, Glyzerin, Trimethylolpropan, Trimethylolethan oder Pentaerythrit, in Frage. Besonders bevorzugt sind die Veresterungsprodukte der Acetoessigsäure mit Mono- und Diolen der oben genannten Art.

Zur Vervollständigung der Reaktion kann es ebenfalls vorteilhaft sein, das bei der Reaktion gebildete Wasser aus dem Reaktionsgemisch beispielsweise destillativ zu entfernen.

Überraschenderweise wurde nun gefunden, daß der Gehalt an störenden Aminen gemäß dem erfindungsgemäßen Verfahren so weit reduziert werden kann, daß wertvolle Produkte gewonnen werden, die sich ausgezeichnet für die Wiederverwendung als Reaktionspartner für Polyisocyanate beim Polyisocyanat-Polyadditionsverfahren eignen.

In den nachfolgenden Beispielen, die der Erläuterung der Erfindung dienen, werden die folgenden Ausgangsstoffe bzw. Alkoholyseprodukte eingesetzt:

Dabei bedeuten:
- OH-Z: Hydroxylzahl [mg KOH/g]
- NH-Z: Aminzahl [mg KOH/g]
- S-Z: Säurezahl [mg KOH/g]

### Polyurethanharnstoff A1

Es handelt sich um ein Granulat einer max. Korngröße von 8 mm aus glasfaserverstärktem Polyurethanpolyharnstoff der Dichte 1,26 g/cm³, hergestellt in Analogie zu Beispiel 2 der DE-PS 2 622 951 (100 Gew.-Tl. eines Polyolgemisches, bestehend aus
- 87 Gew.-%: eines Polyethers der OH-Zahl 28, der durch Addition von Propylenoxid und anschließende Addition von Ethylenoxid an Trimethylolpropan erhalten wurde,
- 13 Gew.-%: einer Mischung aus 65 Gewichtsteilen 1-Methyl-3,5-diethylphenylendiamin-(2,4) und 35 Gewichtsteilen 1-Methyl-3,5-diethylphenylen-diamin-(2,6),
- 0,06 Gew.-%: eines Komplexes aus 1 Mol Dibutylzinndilaurat und 1 Mol 2,3-Dimethyl-3,4,5,6-tetrahydropyrimidin,
werden auf einer Reaktionsspritzgußmaschine (RTM) gegen
- 100 Gew.-Tl.: eines Polyisocyanatgemisches, bestehend aus
- 30 Gew.-%: eines partiell carbodiimidisierten 4,4'-Diphenylmethandiisocyanats mit einem Isocyanatgehalt von 30 Gew.-% und
- 70 Gew.-%: reines 4,4'-Diphenylmethandiisocyanat,
verarbeitet und in beliebige Formen ausgetragen).

### Beispiel 1

### Glykolysat G1

In einem mit Rührer und Heizmantel ausgestatteten 20 l-Planschlifftopf werden 8 kg Diethylenglykol vorgelegt, mit Stickstoff überlagert und auf 220°C vorgeheizt. In das heiße Glykol werden portionsweise 8 kg A1 unter Stickstoffüberschleierung eingetragen. Die Zugabe wird so bemessen, daß jederzeit ein rührfähiges Gemisch vorliegt. Nach vollständiger Zugabe von A1 werden bei ca. 200°C 800 g Acetessigsäureethylester zugegeben. Nach weiteren 90 Minuten Reaktionszeit erhält man ein flüssiges Produkt mit folgenden Daten:
OH-Z = 450
NH-Z = 37
S-Z = 0,12
sterisch gehindertes, primäres, aromatisches Diamin: 0,35 Gew.-%
sterisch ungehindertes, primäres, aromatisches Diamin: < 0,1 Gew.-%

### Beispiel 2

### Glykolysat G2

In einem mit Rührer und Heizmantel ausgestatteten 20 l-Planschlifftopf werden 8 kg Diethylenglykol und 0,800 kg Acetessigsäureethylester vorgelegt, mit Stickstoff überlagert und auf 220°C vorgeheizt. In das heiße Gemisch werden portionsweise 8 kg A1 unter Stickstoffüberschleierung eingetragen. Die Zugabe wird so bemessen, daß jederzeit ein rührfähiges Gemisch vorliegt. Nach vollständiger Zugabe von A1 wird bei ca. 200 bis 210°C 90 Minuten nachgerührt. Man erhält ein flüssiges Produkt mit folgenden Daten:
OH-Z = 353
NH-Z = 33
S-Z = 0,07
sterisch gehindertes, primäres, aromatisches Diamin: 0,29 Gew.-%
sterisch ungehindertes, primäres, aromatisches Diamin: < 0,1 Gew.-%

## Patentansprüche

1. Verfahren zur Herstellung von für das Polyisocyanat-Polyadditionsverfahren geeigneten, Hydroxylgruppen aufweisenden Verbindungen aus Polyurethanpolyharnstoff- und/oder Polyharnstoffabfällen durch Behandlung von Polyurethanpolyharnstoff- und/oder Polyharnstoffabfällen mit Di- und/oder Polyolen bei Temperaturen von 160 bis 260°C, wobei vorzugsweise während der Aufheizphase das sich im Reaktionsgefäß befindende Wasser destillativ entfernt wird, dadurch gekennzeichnet, daß der Reaktionsmischung vor oder während der Alkoholysereaktion 1,3-Dicarbonylverbindungen zugesetzt werden.

2. Verfahren gemäß Anspruch 1, dadurch gekennzeichnet, daß die 1,3-Dicarbonylverbindungen in einer Menge von 0,5 bis 30 Gew.-%, bezogen auf das Gesamtgemisch an Polyurethanpolyharnstoff- und/oder Polyharnstoffabfällen, eingesetzt werden.

## Claims

1. Process for the preparation of hydroxyl group-containing compounds suitable for the polyisocyanate polyaddition process from polyurethane polyurea wastes and/or polyurea wastes by treating polyurethane polyurea wastes and/or polyurea wastes with diols and/or polyols at temperatures of from 160 to 260°C, wherein the water which is present in the reaction vessel is removed by distillation preferably during the heating-up phase, characterised in that 1,3-dicarbonyl compounds are added to the reaction mixture before or during the alcoholysis reaction.

2. Process according to Claim 1, characterised in that the quantity of 1,3-dicarbonyl compounds utilised is from 0.5 to 30 wt.%, in relation to the total mixture of polyurethane polyurea wastes and/or polyurea wastes.

## Revendications

1. Procédé de préparation de composés contenant des groupes hydroxyle utilisables pour le procédé de polyaddition de polyisocyanates, à partir de déchets de polyuréthanepolyurées et/ou de polyurées, par traitement de déchets de polyuréthanepolyurées et/ou de polyurées avec des diols et/ou des polyols à des températures de 160 à 260°C, avec de préférence une élimination par distillation de l'eau se trouvant dans le récipient de réaction pendant la phase de chauffage, caractérisé en ce que en l'on ajoute au mélange réactionnel, avant ou pendant la réaction d'alcoolyse, des composés 1,3-dicarbonylés.

2. Procédé selon la revendication 1, caractérisé en ce que l'on utilise les composés 1,3-dicarbonylés en une quantité de 0,5 à 30 % en masse par rapport au mélange total de déchets de polyuréthanepolyurées et/ou de polyurées.
